(19) Europäisches Patentamt
European Patent Office
Office européen des brevets

(11) **EP 1 515 118 B1**

(12) **FASCICULE DE BREVET EUROPEEN**

(45) Date de publication et mention de la délivrance du brevet:
**20.06.2012 Bulletin 2012/25**

(51) Int Cl.:
***G01C 19/56*** *(2012.01)*

(21) Numéro de dépôt: **04103499.2**

(22) Date de dépôt: **22.07.2004**

(54) **Gyromètre micro-usiné à structure vibrante et à détection dans le plan de la plaque usinée**

Mikromechanisches Schwingungsgyroskop mit einer Detektion in der Fertigungsebene

Micro-machined vibrating gyroscope with in-plane detection

(84) Etats contractants désignés:
**CH DE FR GB IT LI**

(30) Priorité: **09.09.2003 FR 0310608**

(43) Date de publication de la demande:
**16.03.2005 Bulletin 2005/11**

(73) Titulaire: **Thales**
**92200 Neuilly Sur Seine (FR)**

(72) Inventeurs:
• **CHAUMET, Bernard**
**94117, ARCUEIL Cedex (FR)**
• **LOIL, Eric**
**94117, ARCUEIL Cedex (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**EP-A- 1 170 573        WO-A-02/066927**
**US-A1- 2003 131 664**

EP 1 515 118 B1

## Description

L'invention concerne les capteurs inertiels destinés à la mesure de vitesses angulaires, ou gyromètres, et plus précisément les gyromètres micro-usinés selon des technologies de gravure, dépôts, dopages, etc, semblables à celles qui sont utilisées dans le domaine des circuits intégrés électroniques.

On connaît déjà de tels capteurs inertiels micro-usinés réalisés sur une plaque de silicium ou de quartz. La structure est plane dans le plan de la plaque de silicium ou de quartz dans laquelle elle est gravée (cf WO 02/066927, EP 1 170 573 ou US 2003/131664.

Des structures à deux masses vibrantes couplées mécaniquement à la manière d'un diapason ont déjà été réalisées : la structure d'un gyromètre ainsi réalisé comprend typiquement deux masses mobiles coplanaires excitées en vibration et reliées en diapason, c'est-à-dire que les deux masses sont reliées à une structure de couplage centrale qui transfère l'énergie de vibration de la première masse vers la deuxième et réciproquement.

Les masses sont excitées en vibration dans le plan de la plaque par une structure d'excitation électrique. Cette vibration dans le plan de la plaque s'exerce perpendiculairement à un axe dit « axe sensible » du gyromètre, perpendiculaire à la direction de cette vibration. Lorsque le gyromètre tourne avec une certaine vitesse angulaire autour de son axe sensible, la composition de la vibration forcée avec le vecteur de rotation angulaire engendre, par effet Coriolis, des forces qui mettent les masses mobiles en vibration naturelle perpendiculairement à la vibration d'excitation et à l'axe de rotation ; l'amplitude de cette vibration naturelle est proportionnelle à la vitesse de rotation.

La vibration naturelle est détectée par une structure de détection électrique. Les signaux électriques qui en résultent sont exploités pour en déduire une valeur de la vitesse angulaire autour de l'axe sensible.

Dans certains cas, l'axe sensible est situé dans le plan de la plaque et la structure de détection détecte un mouvement perpendiculaire au plan des masses mobiles. Dans d'autres cas, l'axe sensible du gyromètre est l'axe Oz perpendiculaire au plan de la plaque. Le mouvement d'excitation des masses mobiles est engendré dans une direction Ox du plan alors qu'un mouvement résultant de la force de Coriolis est détecté dans une direction Oy du même plan, perpendiculaire à Ox.

Les masses sont susceptibles de vibrer selon deux modes de vibration orthogonaux, le mode d'excitation aussi désigné mode primaire et le mode de détection aussi désigné mode secondaire.

L'architecture en diapason présente un inconvénient : le mode secondaire n'est pas dynamiquement équilibré. De ce fait, ce mode transmet un couple sur le support du diapason ce qui rend ce mode sensible aux conditions de fixation sur le support et aux perturbations extérieures transmises par le support.

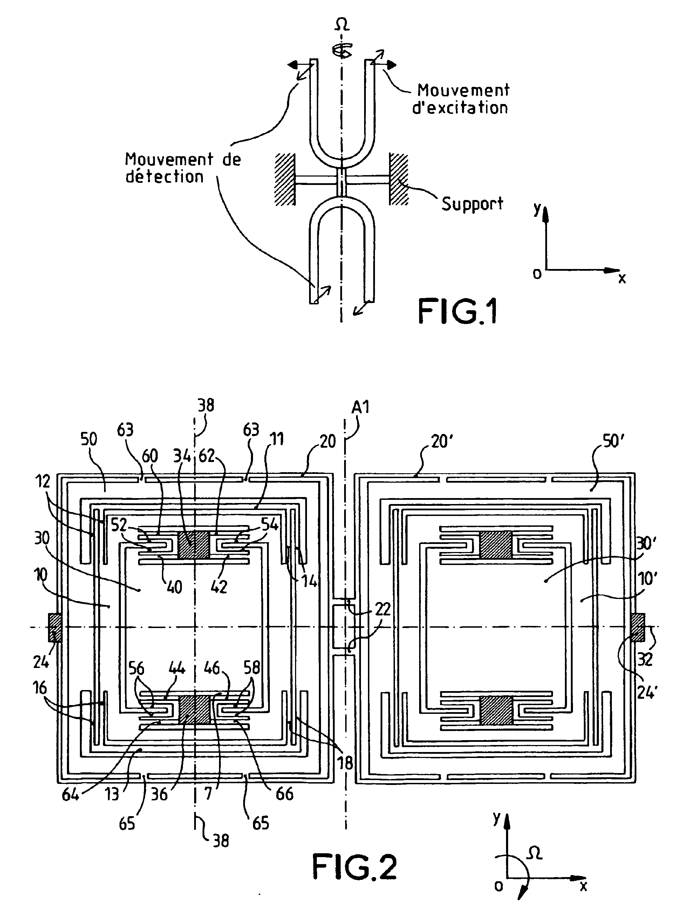

Pour remédier à ce problème, une solution consiste à isoler le mode secondaire en utilisant une structure à double diapason comme représentée figure 1. L'exemple le plus connu est celui du gyromètre à double fourche et en quartz de Systron-Donner.

Le mouvement d'excitation, parallèle à Ox, est fourni par la fourche supérieure comme indiqué sur la figure et l'axe sensible est l'axe Oy. Le couple de Coriolis qui prend naissance sur la fourche d'excitation engendre un mouvement de détection sur la fourche supérieure. Par couplage, un mouvement de détection opposé s'instaure dans la fourche inférieure. Ce mouvement de la fourche inférieure en opposition de phase avec celui de la fourche supérieure permet alors d'isoler parfaitement le mode de détection. Mais sur un tel gyromètre le mouvement de détection se situe hors du plan du substrat, ce qui présente des inconvénients comme par exemple une maîtrise plus difficile de l'orthogonalité entre le mouvement d'excitation et le mouvement de détection et une technologie de réalisation plus compliquée.

Un but de l'invention est de proposer une structure de microgyromètre dynamiquement équilibré, dont les mouvements d'excitation et de détection sont dans le plan de la plaque. Un autre but est de proposer une structure qui permette également une mesure de rotation avec une très bonne sensibilité et des perturbations minimes dues au mouvement d'excitation ou à d'autres effets.

Selon l'invention, on propose un gyromètre à structure vibrante réalisé par micro-usinage dans une plaque mince plane, principalement caractérisé en ce qu'il comporte deux ensembles mobiles symétriques couplés par une structure de couplage reliant ces deux ensembles pour permettre un transfert d'énergie mécanique de vibration entre eux, chaque ensemble mobile comportant trois ensembles mobiles, un premier élément mobile inertiel et destiné à vibrer selon deux directions orthogonales Ox et Oy dans le plan de la plaque, un deuxième élément mobile destiné à vibrer selon Oy et relié au premier élément mobile et à des zones d'ancrage fixe par des premiers moyens de liaison qui permettent la transmission au deuxième élément mobile du mouvement de vibration du premier élément mobile selon Oy sans autoriser un mouvement du deuxième élément selon la direction Ox, un troisième élément mobile destiné à vibrer selon Oy et relié au deuxième élément mobile et à des zones d'ancrage fixe par des seconds moyens de liaison qui permettent la transmission en opposition de phase au troisième élément mobile du mouvement de vibration du deuxième élément mobile selon Oy.

On obtient ainsi un gyromètre à double diapason, qui permet que le mouvement de détection soit ainsi équilibré au sein de chacun des deux ensembles mobiles du fait que le mouvement du troisième élément mobile contrebalance le mouvement des premier et second éléments mobiles.

En outre, le premier élément est excité en mouvement selon Ox mais n'entraîne pas le deuxième élément dans ce mouvement.

En pratique, le premier élément mobile est un cadre intermédiaire externe rectangulaire relié à la structure de couplage et entourant le deuxième élément mobile constitué d'un cadre intermédiaire interne rectangulaire entourant lui-même le troisième élément mobile, et la structure de couplage comprend un cadre extérieur entourant le cadre intermédiaire externe.

D'autres caractéristiques et avantages de l'invention apparaîtront à la lecture de la description détaillée qui suit et qui est faite en référence aux dessins annexés dans lesquels :

- la figure 1 déjà décrite représente schématiquement un gyromètre à double diapason,
- la figure 2 représente schématiquement en vue de dessus la structure générale du gyromètre micro-usiné selon l'invention,
- la figure 3 représente schématiquement en vue de dessus la structure plus détaillée du gyromètre micro-usiné selon l'invention.

La figure 2 représente la plaque mince plane de silicium usinée selon l'invention pour faire un gyromètre dont l'axe sensible est perpendiculaire au plan de la plaque (qui est le plan de la figure).

Le silicium est choisi comme matériau préférentiel, d'une part pour ses propriétés mécaniques et d'autre part pour sa conductivité élevée lorsqu'il est suffisamment dopé par une impureté appropriée (du bore en général pour du silicium de type P). Le silicium conducteur permet de réaliser les fonctions électriques du gyromètre et notamment les fonctions d'excitation et les fonctions de détection ; ces fonctions sont réalisées par des peignes capacitifs interdigités alimentés en courant ou en tension électrique ; les doigts de ces peignes, directement usinés dans le silicium conducteur, servent d'armatures de condensateurs utiles aux fonctions d'excitation et aux fonctions de détection.

L'épaisseur de la plaque de silicium d'origine est par exemple de quelques centaines de micromètres ; la plaque comporte d'une part des zones d'ancrage fixes formées dans cette épaisseur et d'autre part la structure vibrante proprement dite, libre par rapport aux zones d'ancrage et formée sur une épaisseur plus faible, par exemple sur une épaisseur d'une soixantaine de micromètres, isolée du reste de l'épaisseur de la plaque par un intervalle étroit. Sur cette épaisseur d'une soixantaine de micromètres, la plaque de silicium est découpée par micro-usinage selon les motifs de masse mobile, cadre mobile, structure de couplage, bras de flexion, et peignes interdigités désirés.

L'usinage de la structure peut être réalisé en utilisant comme substrat d'origine un substrat de silicium sur isolant, mais d'autres méthodes sont également possibles. Un substrat en silicium sur isolant est constitué d'un substrat de silicium de quelques centaines de micromètres d'épaisseur qui porte sur sa face avant une fine couche d'oxyde de silicium elle-même recouverte d'une couche de silicium monocristallin de quelques dizaines de micromètres d'épaisseur. L'usinage consiste à attaquer le silicium du substrat par sa face avant, selon les motifs de surface désirés, au moyen de techniques de photogravure en usage en microélectronique, jusqu'à atteindre la couche d'oxyde, avec un produit de gravure sélectif qui attaque le silicium sans attaquer significativement l'oxyde. On arrête la gravure lorsque la couche d'oxyde est mise à nu. Cette couche d'oxyde est ensuite enlevée par attaque sélective avec un autre produit de manière à ne conserver que la couche superficielle de silicium monocristallin, sauf à l'endroit des zones d'ancrage où la couche d'oxyde subsiste et forme une liaison solidaire entre le substrat et la couche superficielle de silicium monocristallin. L'usinage par la face avant définit les différents découpages des parties mobiles. Ce sont donc ces motifs de surface, zones d'ancrage et découpages des parties mobiles, que l'on voit sur les figures.

La structure générale du gyromètre est une structure de type double diapason, c'est-à-dire une structure symétrique comportant deux ensembles inertiels mobiles vibrant en opposition de phase, ces ensembles mobiles étant reliés entre eux par une structure de couplage servant à transmettre sans pertes, d'un ensemble à l'autre, les énergies mécaniques de vibration des deux ensembles pour mettre en opposition de phase ces vibrations. La symétrie de la structure est une symétrie par rapport à un axe A1, avec un ensemble mobile de chaque côté de cet axe.

La structure de couplage est constituée de préférence par deux cadres extérieurs rectangulaires 20 et 20' à l'intérieur desquels sont situés les ensembles inertiels mobiles. Les cadres 20 et 20' sont reliés entre eux par une double courte barre de liaison 22 pouvant être considérée comme rigide. La double barre de liaison 22 relie le côté du premier cadre au côté adjacent du deuxième cadre. Elle est perpendiculaire à l'axe A1 et centrée sur cet axe. La double barre de liaison courte 22 peut être simple ou renforcée par une autre barre de liaison courte située au milieu de la double barre 22 et également centrée sur l'axe A1. L'écartement plus ou moins grand de chacune des barres constituant la double barre 22, permet un certain ajustement de l'écart entre les fréquences utiles d'excitation et de détection du microgyromètre.

Les cadres extérieurs 20 et 20' de la structure de couplage entourent les deux ensembles mobiles en principe par au moins trois côtés et ils sont reliés à ces deux ensembles de préférence le long de côtés perpendiculaires à l'axe de symétrie générale A1. Les cadres 20 et 20' peuvent (facultativement) être fixés chacun à une zone d'ancrage 24, 24' située au milieu d'un côté opposé au côté relié à la barre de liaison 22. Dans ce cas, les cadres 20 et 20' entourent complètement chacun un ensemble mobile inertiel respectif. La barre de liaison centrale 22 et les autres côtés des cadres 20 et 20' ne sont pas reliés à des zones d'ancrage fixes.

Les peignes interdigités servant à la mise en vibration des ensembles inertiels et à la détection du mouvement résultant de la force de Coriolis sont disposés eux aussi à l'intérieur de chacun des cadres extérieurs 20 et 20'. Dans ce qui suit on va décrire seulement les éléments situés à l'intérieur du cadre 20, la structure étant rigoureusement identique pour l'autre cadre 20' ; les éléments intérieurs au cadre 20' sont désignés par les mêmes références que celles du cadre 20 mais affectés du signe 'prime'.

Chaque ensemble inertiel comporte une masse inertielle mobile centrale 30, un cadre inertiel intermédiaire interne 10 qui l'entoure et un cadre inertiel intermédiaire externe 50 qui entoure le cadre interne 10 et qui est donc situé entre le cadre intermédiaire interne 10 et le cadre extérieur 20.

La masse centrale 30 que l'on désigne par masse de détection et le cadre intermédiaire interne 10 ne peuvent se déplacer que selon une direction Oy (axe vertical dans le plan de la figure) ; le cadre intermédiaire externe 50 peut se déplacer selon l'axe Oy et selon un axe Ox perpendiculaire à Oy et également situé dans le plan de la figure. L'axe sensible du gyromètre est un axe Oz perpendiculaire au plan de la plaque. On excite une vibration du cadre intermédiaire inertiel externe 50 dans la direction Ox ; lorsque le gyromètre tourne autour de son axe sensible Oz, une vibration du cadre intermédiaire externe 50 est engendrée selon l'axe Oy. Cette vibration selon Oy est transmise au cadre intermédiaire interne 10, alors que la vibration selon Ox n'est pas transmise : la vibration selon Oy du cadre intermédiaire interne 10 est en phase avec celle du cadre intermédiaire externe 50. La vibration selon Oy du cadre intermédiaire interne 10 est transmise à la masse 30 : la vibration selon Oy de la masse 30 est en opposition de phase avec celle du cadre interne 10 et d'amplitude proportionnelle au mouvement de vibration du cadre interne 10. Le mouvement de détection est ainsi équilibré au sein de chacun des deux ensembles mobiles du fait que le mouvement de la masse de détection 30 contrebalance le mouvement des cadres intermédiaires interne 10 et externe 50.

Selon un autre mode de configuration, la masse centrale 30 peut se déplacer selon l'axe Oy et selon un axe Ox, les cadres intermédiaires interne 10 et externe 50 ne pouvant se déplacer que selon une direction Oy. On excite une vibration de la masse centrale 30 dans la direction Ox ; lorsque le gyromètre tourne autour de son axe sensible Oz, une vibration de la masse centrale 30 est engendrée selon l'axe Oy. Cette vibration selon Oy est transmise au cadre intermédiaire interne 10 alors que la vibration selon Ox n'est pas transmise. Cette vibration du cadre intermédiaire interne 10 selon Oy est transmise au cadre intermédiaire externe 50.

La suite de la description est basée sur le premier mode de configuration qui est un mode préférentiel.

Comme on le verra, une structure d'excitation de la vibration est associée au cadre intermédiaire externe 50, et une structure de détection de vibration est associée à la masse de détection 30. La structure de couplage, constituée par les cadres 20, 20' et la barre 22 qui les relie, transmet l'énergie mécanique de vibration de l'ensemble inertiel mobile d'un côté à l'autre de l'axe A1 aussi bien pour les vibrations selon Ox que les vibrations selon Oy car cette structure de couplage est reliée directement aux cadres intermédiaires qui peuvent vibrer à la fois selon Ox et selon Oy.

La masse de détection 30 est reliée à des zones d'ancrage fixes par au moins deux bras de flexion conçus pour autoriser un déplacement de la masse selon Oy mais pour empêcher tout mouvement significatif de la masse dans la direction Ox. Ces bras sont de préférence situés de part et d'autre d'un axe de symétrie 32 de la masse, parallèle à Ox. Il y a alors deux zones d'ancrage 34 et 36 situées de part et d'autre de la masse de détection, symétriques par rapport à cet axe de symétrie 32. De plus, ces zones sont de préférence situées sur un autre axe de symétrie 38 de la masse, axe qui est parallèle à Oy. Les bras de flexion qui relient la masse 30 aux zones 34 et 36 sont des bras allongés dans la direction Ox, de manière à présenter une grande raideur (grande résistance à l'allongement) dans cette direction. Ils sont par ailleurs très étroits, comparativement à leur longueur, pour présenter une faible raideur dans la direction Oy perpendiculaire à Ox ; cette faible raideur autorise un déplacement de la masse selon Oy. Il y a de préférence quatre bras de flexion plutôt que deux, la masse étant reliée à la zone d'ancrage 34 par deux bras 40 et 42 de part et d'autre de la zone 34 ; la masse est reliée par ailleurs à la deuxième zone d'ancrage 36 par deux bras 44 et 46 de part et d'autre de la zone 36.

Pour maximiser la flexibilité des bras de flexion dans la direction Oy en augmentant le rapport entre la longueur et la largeur de ces bras, on relie chaque bras d'un côté à proximité d'un coin d'extrémité de la masse (la masse a une forme en principe généralement rectangulaire) et de l'autre à la zone d'ancrage située sur l'axe de symétrie 38. On notera que, plutôt qu'une zone d'ancrage centrale située au milieu d'un côté de la masse mobile, on pourrait avoir deux zones d'ancrage situées plutôt à proximité des coins d'extrémité de la masse de part et d'autre de l'axe 38.

Le cadre intermédiaire mobile interne 10 entoure de préférence complètement la masse 30. La masse 30 est reliée au cadre intermédiaire interne 10 par au moins deux bras de flexion qui ont pour particularité de présenter une très grande raideur (très grande résistance à l'allongement) dans la direction Ox et une faible raideur dans la direction Oy. Ces bras sont allongés dans la direction Oy et ont une largeur faible devant leur longueur, afin de présenter cette différence de raideurs.

Il y a de préférence quatre bras de flexion de ce type entre la masse 30 et le cadre intermédiaire interne 10, les bras étant situés en pratique chacun à un coin de la masse mobile si elle est de forme généralement rectangulaire.

Ils sont disposés symétriquement d'une part par rapport à l'axe de symétrie 32 de la masse (axe parallèle à Ox) et d'autre part par rapport à l'axe de symétrie 38 (parallèle à Oy).

Ces bras sont désignés par les références 52, 54, 56, 58. Ils ont de préférence une forme repliée en U pour diviser par deux leur dimension longitudinale sans réduire significativement leur longueur utile donc sans diminuer significativement le rapport élevé entre leur raideur selon Ox et leur raideur selon Oy. Les deux branches repliées du U sont allongées parallèlement à Ox et sont reliées entre elles par un court élément de liaison. Les bras 52 à 58 pourraient cependant ne pas être repliés et s'étendre en totalité selon la direction Ox entre le cadre intermédiaire interne et la masse. Le repliement permet de gagner de la place sans modifier significativement les caractéristiques mécaniques désirées.

Comme on le voit sur la figure 2, la forme repliée en U allongé des bras de flexion entre le cadre intermédiaire interne 10 et la masse de détection 30 est obtenue par des découpes dans le cadre intermédiaire interne et dans la masse mobile.

Ces seconds bras de flexion 52, 54 sont situés entre les premiers bras de flexion 40, 42 reliant la masse 30 à la zone d'ancrage 34, et des troisièmes bras de flexion 60, 62, reliant le cadre intermédiaire interne 10 à cette zone d'ancrage 34. De même, les seconds bras de flexion 56, 58 sont situés entre les premiers bras de flexion 44, 46 reliant la masse 30 à la zone d'ancrage 36, et des troisièmes bras de flexion 64, 66, reliant le cadre intermédiaire interne 10 à cette zone d'ancrage 36.

Le cadre intermédiaire interne 10 est relié à ces zones d'ancrage fixe 34, 36 par au moins deux bras de flexion conçus pour autoriser un déplacement de la masse selon Oy mais pour empêcher tout mouvement significatif de la masse dans la direction Ox. Ces bras sont de préférence situés de part et d'autre d'un axe de symétrie 32 de la masse, parallèle à Ox. Les bras de flexion qui relient le cadre intermédiaire interne 10 aux zones 34 et 36 sont des bras allongés dans la direction Ox, de manière à présenter une grande raideur (grande résistance à l'allongement) dans cette direction. Ils sont par ailleurs très étroits, comparativement à leur longueur, pour présenter une faible raideur dans la direction Oy perpendiculaire à Ox ; cette faible raideur autorise un déplacement du cadre intermédiaire interne selon Oy. Il y a de préférence quatre bras de flexion plutôt que deux, le cadre intermédiaire interne étant reliée à la zone d'ancrage 34 par deux bras 60 et 62 de part et d'autre de la zone 34 ; le cadre intermédiaire interne est relié par ailleurs à la deuxième zone d'ancrage 36 par deux bras 64 et 66 de part et d'autre de la zone 36.

Pour maximiser la flexibilité des bras de flexion dans la direction Oy en augmentant le rapport entre la longueur et la largeur de ces bras, on relie chaque bras d'un côté à proximité d'un coin d'extrémité de la masse (la masse a une forme en principe généralement rectangulaire) et de l'autre à la zone d'ancrage située sur l'axe de symétrie 38.

Le cadre intermédiaire mobile externe 50 entoure de préférence complètement le cadre intermédiaire interne 10. Le cadre intermédiaire interne 10 est relié au cadre intermédiaire externe 50 par au moins deux bras de flexion qui ont pour particularité de présenter une très grande raideur (très grande résistance à l'allongement) dans la direction Oy et une faible raideur dans la direction Ox. Ces bras sont allongés dans la direction Oy et ont une largeur faible devant leur longueur, afin de présenter cette différence de raideurs.

Il y a de préférence quatre bras de flexion de ce type entre les cadres intermédiaires interne 10 et externe 50, les bras étant situés en pratique chacun à un coin du cadre intermédiaire interne. Ils sont disposés symétriquement d'une part par rapport à l'axe de symétrie 32 (axe parallèle à Ox) et d'autre part par rapport à l'axe de symétrie 38 (parallèle à Oy).

Ces bras sont désignés par les références 12, 14, 16, 18. Ils ont de préférence une forme repliée en U pour diviser par deux leur dimension longitudinale sans réduire significativement leur longueur utile donc sans diminuer significativement le rapport élevé entre leur raideur selon Oy et leur raideur selon Ox. Les deux branches repliées du U sont allongées parallèlement à Oy et sont reliées entre elles par un court élément de liaison. Les bras 12, 14, 16, 18 pourraient cependant ne pas être repliés et s'étendre en totalité selon la direction Oy entre le cadre intermédiaire interne et le cadre intermédiaire externe. Le repliement permet de gagner de la place sans modifier significativement les caractéristiques mécaniques désirées.

Si les bras sont repliés comme sur la figure 2, il est préférable de relier par ailleurs l'élément court de liaison (qui relie les deux branches du U) d'un premier bras 12 à l'élément court correspondant du bras 14 qui est symétrique du bras 12 par rapport à l'axe 38. Une traverse 11 est prévue à cet effet, parallèle à Ox, pour relier le fond du U du bras de liaison 12 au fond du U du bras de flexion 14, les bras 12 et 14 étant symétriques par rapport à l'axe 38. Une traverse similaire 13, symétrique de la traverse 11 par rapport à l'axe 32, relie les éléments symétriques 16 et 18. Ces traverses 11 et 13, parallèles à Ox, renforcent la symétrie de transmission d'un mouvement selon Oy imposé par le cadre intermédiaire externe 50 au cadre intermédiaire interne 10. Elles ne sont pas présentes si les bras 12, 14, 16, 18 n'ont pas une forme repliée car dans ce cas les extrémités des bras 12 et 14 seraient déjà reliées rigidement par le cadre intermédiaire externe 50 lui-même.

Comme on le voit sur la figure 2, la forme repliée en U allongé des bras de flexion entre le cadre intermédiaire interne et le cadre intermédiaire externe est obtenue par des découpes dans les cadres intermédiaires interne et externe, mais de manière générale, les bras de flexion partent à peu près d'un coin intérieur du cadre intermédiaire interne vers un coin en vis-à-vis du cadre intermédiaire externe même si le point de fixation effectif du bras sur le cadre ne part pas exactement de ce coin. On peut considérer que le cadre intermédiaire interne est suspendu globalement par ses quatre coins au cadre intermédiaire externe.

Le cadre intermédiaire externe 50, entouré par le cadre extérieur 20 de la structure de couplage, est relié à ce cadre extérieur par des bras de liaison courts 63 d'un côté, 65 de l'autre, les bras 63 étant symétriques des bras 65 par rapport à l'axe de symétrie 32. Les bras 63, de même que les bras 65, sont répartis le long d'un côté du cadre 50, ce côté étant parallèle à l'axe Ox. Ces bras courts constituent des liaisons pratiquement rigides à travers lesquelles l'énergie de vibration selon Ox et Oy du cadre intermédiaire externe 50 (et du cadre intermédiaire interne ainsi que de la masse de détection 30) peut passer vers la structure de couplage et donc vers les deuxièmes cadres intermédiaires interne 10' et externe 50' et la deuxième masse de détection 30'. Dans l'exemple représenté, deux bras courts 63 sont répartis le long du côté du cadre intermédiaire externe 50 ; deux autres bras courts 65 sont répartis le long du côté opposé.

Il n'y a pas de bras de liaison entre le cadre intermédiaire externe et le cadre extérieur de couplage le long des côtés parallèles à l'axe Oy.

Selon une variante, les zones d'ancrage fixe de la masse de détection 30 sont distinctes des zones d'ancrage fixe du cadre intermédiaire interne 10.

Le gyromètre selon l'invention comprend six modes de vibration dans le plan parmi lesquels figurent les modes utiles d'excitation et de détection en diapason, les quatre autres modes étant des modes parasites. Les moyens de liaison caractérisés par des coefficients de raideur, permettent de séparer les modes utiles des autres modes parasites. Le gyromètre est dimensionné de préférence de telle sorte que la condition suivante soit respectée :

$$K_{40,42,44,46}/M_{30} = (K_{60,62,64,66}+2K_{20})/(M_{50}+M_{10}),$$

$K_{40,42,44,46}$ étant le coefficient de raideur des seconds bras de flexion 40, 42, 44, 46 reliant la masse 30 aux zones d'ancrage,

$K_{60, 62, 64, 66}$, le coefficient de raideur des quatrièmes bras de flexion 60, 62, 64, 66 reliant le cadre intermédiaire interne 10 aux zones d'ancrage,

$K_{20}$, le coefficient de raideur selon Oy du cadre extérieur,

$M_{50}$, $M_{10}$, $M_{30}$ les masses respectives des premier, deuxième et troisième éléments mobiles.

Lorsque cette condition est respectée, le mode diapason est dynamiquement équilibré, c'est-à-dire que la résultante des efforts transmis sur le support est nul et l'amplitude $Y_{30}$ du mouvement de détection du troisième élément mobile est telle que :

$$Y_{30}/Y_{50,10} = (M_{50}+M_{10})/M_{30}$$

$Y_{50,10}$ étant l'amplitude du mouvement des premier ou deuxième élément mobile selon Oy, l'amplitude selon Oy du premier élément étant égale à celle du deuxième élément.

En choisissant $M_{30} < M_{50}+M_{10}$, l'amplitude selon Oy du mouvement de détection $Y_{30}$ est donc supérieure à celle de l'ensemble des premier et deuxième éléments. On peut donc de cette manière augmenter la sensibilité du gyromètre dans le rapport $(M_{50}+M_{10})/M_{30}$.

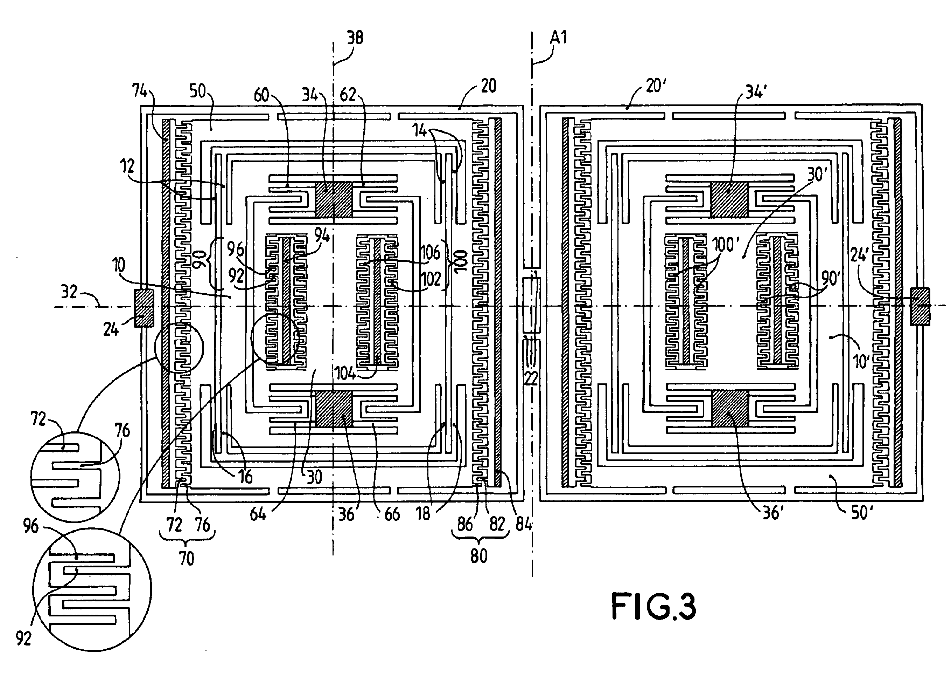

Comme indiqué figure 3, le cadre intermédiaire externe 50 est excité en vibration selon Ox par une première structure en peigne interdigité 70 qui comporte un demi-peigne fixe 72, attaché à une zone d'ancrage 74 et un demi-peigne mobile 76 constitué le long d'un premier côté (parallèle à Oy) du cadre 50. Les dents ou doigts du demi-peigne fixe 72, en silicium conducteur usiné en même temps que les autres éléments du gyromètre, constituent la première armature d'une capacité et les dents ou doigts du demi-peigne mobile 76, également en silicium conducteur, constituent la deuxième armature de cette capacité. Classiquement, la structure en peigne agit comme excitateur du mouvement de la partie mobile grâce aux forces d'attraction qui s'exercent entre les doigts en regard lorsqu'une tension est appliquée entre les demi-peignes. La tension d'excitation est alternative pour engendrer un mouvement de vibration, et la fréquence de cette tension est choisie très proche de ou égale à la fréquence de résonance mécanique de la structure. La tension d'excitation est appliquée entre la zone d'ancrage 74 et l'une et/ou l'autre des zones d'ancrage 34 et 36. Le demi-peigne fixe 72 est en contact électrique direct (par le corps du silicium conducteur) avec la zone d'ancrage 74 ; le demi-peigne mobile 76 est en contact avec les zones d'ancrage 34 et 36 par l'intermédiaire des bras de flexion 12, 14, 16, 18 du corps du cadre intermédiaire interne 10, des bras de flexion 60, 62, 64, 66, et du cadre 50, de sorte qu'en appliquant une tension entre la zone d'ancrage 74 et les zones d'ancrage 34 ou 36 on applique bien une tension entre la partie fixe et la partie mobile du peigne 70.

Le mouvement d'excitation engendré sur le cadre intermédiaire externe 50 est selon la direction Ox, les peignes agissant par modification de la surface en recouvrement mutuel des doigts intercalés.

Le microgyromètre comporte de préférence une autre structure à peignes interdigités associée au cadre, symétrique de la structure 70 par rapport à l'axe 38. Elle comporte un demi-peigne fixe 82 attaché à une zone d'ancrage 84, et un demi-peigne mobile 86 usiné le long d'un côté du cadre 50. Cette structure peut servir de détecteur du mouvement du cadre selon Ox. Elle est utile pour l'asservissement du mouvement excité par le peigne 70 ; l'asservissement est en général utile pour ajuster la fréquence d'excitation par rapport à la fréquence de résonance de la structure. Les tensions détectées par la structure 80 apparaissent entre la zone d'ancrage 84 et les zones d'ancrage 34 et 36.

Au moins un peigne interdigité est associé à la masse de détection 30 pour détecter le mouvement de la masse de détection dans la direction Oy. L'orientation de ces peignes dépend du principe sur lequel repose la détection : si la détection repose sur une mesure des variations de surface en recouvrement mutuel des doigts des demi-peignes fixe et mobile, le peigne de détection des mouvements selon Oy est disposé perpendiculairement au peigne d'excitation 70 (qui repose aussi sur des variations de surface en recouvrement). Mais si la détection repose sur une mesure des variations d'espacement entre les doigts du demi-peigne fixe et du demi-peigne mobile, le peigne de détection est disposé parallèlement au peigne d'excitation. La détection par la variation de l'espacement entre doigts est préférée car elle est plus sensible. L'interdigitation des peignes est alors dissymétrique au repos, les doigts d'un demi-peigne n'étant pas exactement au milieu de l'intervalle entre deux doigts de l'autre demi-peigne, alors qu'un peigne fonctionnant (comme le peigne d'excitation) sur la base de variations de surfaces en recouvrement a les doigts d'un demi-peigne au milieu de l'intervalle entre les doigts de l'autre demi-peigne.

C'est le cas sur la figure 3 : les peignes de détection sont disposés avec la même orientation générale que les peignes 70 et 80, bien qu'ils soient associés à un mouvement selon Oy alors que les peignes 70 et 80 sont associés à un mouvement (excitation ou détection) selon Ox.

Dans l'exemple de la figure 3, la masse de détection est associée à deux peignes interdigités identiques 90 et 100 disposés parallèlement à l'axe de symétrie 38 et de part et d'autre de cet axe. Ces peignes jouent tous les deux le même rôle de détecteur du mouvement de la masse selon Oy , et on pourrait en variante se contenter d'un seul peigne placé au centre de la masse le long de l'axe 38.

Le peigne 90 comporte un demi-peigne fixe 92 attaché à une zone d'ancrage 94 et un demi-peigne mobile 96 faisant partie de la masse de détection elle-même. La masse de détection comporte une découpe pour laisser la place au peigne fixe 92 et à la zone d'ancrage 94, et les bords de cette découpe sont découpés en forme de doigts pour constituer le demi-peigne mobile 96 dans lequel viennent s'intercaler les doigts du demi-peigne fixe. Dans l'exemple représenté, le peigne 90 est double, c'est-à-dire que deux côtés de la découpe de la masse 30 sont pourvus de doigts, et le demi-peigne fixe 92 comporte des doigts de part et d'autre de la zone d'ancrage 94.

La structure interdigitée 100 est rigoureusement symétrique de la structure 90 et est formée dans une autre découpe de la masse de détection 30. Elle comporte un demi-peigne fixe 102, une zone d'ancrage 104, et un demi-peigne mobile 106.

Pour la détection du mouvement selon Oy, un circuit électronique associé à cette structure détecte la modulation en amplitude des tensions électriques présentes entre la zone d'ancrage 94 et les zones d'ancrage 34 et 36, et/ou entre la zone 104 et les zones 34 et 36. Cette modulation n'est due qu'à un déplacement de la masse de détection selon l'axe Oy puisque la masse ne peut se déplacer que selon cet axe.

**Revendications**

1. Gyromètre à structure vibrante réalisé par micro-usinage dans une plaque mince plane, **caractérisé en ce qu'**il comporte deux ensembles mobiles symétriques (30, 10, 50 ; 30', 10', 50') couplés par une structure de couplage (20, 20', 22) reliant ces deux ensembles pour permettre un transfert d'énergie mécanique de vibration entre eux, chaque ensemble mobile comportant trois éléments mobiles (30, 10, 50), un premier élément mobile inertiel (50) destiné à vibrer selon deux directions orthogonales Ox et Oy dans le plan de la plaque, un deuxième élément mobile (10) destiné à vibrer selon Oy et relié au premier élément mobile (50) et à des zones d'ancrage fixe ( 34, 36), par des premiers moyens de liaison (12, 14, 16, 18, 60, 62, 64, 66) qui permettent la transmission au deuxième élément mobile du mouvement de vibration du premier élément mobile selon Oy sans autoriser un mouvement du deuxième élément selon la direction Ox, un troisième élément mobile (30) destiné à vibrer selon Oy et relié au deuxième élément mobile et à des zones d'ancrage fixe ( 34, 36), par des seconds moyens de liaison ( 52, 54, 56, 58, 40, 42, 44, 46) qui permettent la transmission en opposition de phase au troisième élément mobile du mouvement de vibration du deuxième élément mobile selon Oy.

2. Gyromètre selon la revendication précédente, **caractérisé en ce que** le premier élément mobile (50) est un cadre intermédiaire externe rectangulaire relié à la structure de couplage et entourant le deuxième élément mobile (10) constitué d'un cadre intermédiaire interne rectangulaire entourant lui-même le troisième élément mobile (30), et la structure de couplage comprend un cadre extérieur (20) entourant le cadre intermédiaire externe.

3. Gyromètre selon la revendication 2, **caractérisé en ce que** le troisième élément mobile (30) désigné masse de détection est relié au cadre intermédiaire interne (10) par au moins deux premiers bras de flexion étroits et allongés (52, 54, 56, 58) qui présentent une grande résistance à l'allongement dans la direction Ox et une faible raideur dans la direction Oy, et la masse de détection (30) est reliée à au moins une zone d'ancrage par au moins deux seconds bras de flexion étroits et allongés (40, 42, 44, 46) qui présentent une grande résistance à l'allongement dans la direction Ox et une faible raideur dans la direction Oy.

4. Gyromètre selon la revendication précédente, **caractérisé en ce que** chaque premier bras de flexion est replié en U, et présente deux parties allongées s'étendant dans la direction Ox, ces deux parties étant reliées par un élément de liaison court.

5. Gyromètre selon l'une des revendications 2 à 4, **caractérisé en ce que** le cadre intermédiaire interne (10) est relié au cadre intermédiaire externe (50) par au moins deux troisièmes bras de flexion étroits et allongés (12, 14, 16, 18) qui présentent une grande résistance à l'allongement dans la direction Oy et une faible raideur dans la direction Ox, et le cadre intermédiaire interne (10) est relié à au moins une zone d'ancrage (34, 36) par au moins deux quatrièmes bras de flexion étroits et allongés ( 60, 62, 64, 66) qui présentent une grande résistance à l'allongement dans la direction Ox et une faible raideur dans la direction Oy.

6. Gyromètre selon la revendication précédente, **caractérisé en ce que** chaque troisième bras de flexion est replié en U, et présente deux parties allongées s'étendant dans la direction Oy, ces deux parties étant reliées par un élément de liaison court.

7. Gyromètre selon la revendication précédente, **caractérisé en ce que** l'élément de liaison court d'un des troisièmes bras (12) est relié à l'élément de liaison semblable d'un autre troisième bras (14), par une traverse (11) allongée dans la direction Ox.

8. Gyromètre selon l'une des revendications 1 à 7, **caractérisé en ce que** la structure de couplage (20, 20', 22) est reliée au premier élément mobile de chaque ensemble par des liaisons rigides courtes (63, 65).

9. Gyromètre selon l'une des revendications 1 à 8, **caractérisé en ce que** la structure de couplage comprend, autour de chaque ensemble mobile, un cadre extérieur (20, 20') et une courte barre de liaison (22) entre les cadres extérieurs.

10. Gyromètre selon l'une des revendications précédentes, **caractérisé en ce que** les zones d'ancrage fixe du troisième élément mobile (30) sont distinctes des secondes zones d'ancrage fixe du deuxième élément mobile (10).

11. Gyromètre selon l'une des revendications 1 à 10, **caractérisé en ce que** $K_{40,42,44,46}$ étant le coefficient de raideur des seconds bras de flexion (40, 42, 44, 46), $K_{60,62,64,66}$ le coefficient de raideur des quatrièmes bras de flexion (60, 62, 64, 66), $K_{20}$, le coefficient de raideur selon Oy du cadre extérieur, $M_{50}$, $M_{10}$, $M_{30}$ les masses respectives des premier, deuxième et troisième éléments mobiles, la condition suivante est respectée ou quasiment respectée :

$$K_{40,42,44,46}/M_{30} = (K_{60,62,64,66}+2K_{20})/(M_{50}+M_{10}).$$

12. Gyromètre selon la revendication précédente, **caractérisé en ce que** l'on a $M_{30} < M_{50}+M_{10}$ de façon à augmenter la sensibilité du gyromètre.

**Claims**

1. A vibrating structure gyrometer made by micro-machining in a thin planar plate, **characterised in that** it comprises two symmetrical mobile assemblies (30, 10, 50; 30', 10', 50') coupled by a coupling structure (20, 20', 22) linking said two assemblies to allow mechanical vibration energy to be transferred between them, each mobile assembly comprising three mobile elements (30, 10, 50), a first inertial mobile element (50) that is designed to vibrate along two orthogonal directions Ox and Oy in the plane of the plate, a second mobile element (10) that is designed to vibrate along Oy and is linked to the first mobile element (50) and to fixed anchoring areas (34, 36) by first linking means (12, 14, 16, 18, 60, 62, 64, 66) that allow the transmission to the second mobile element of the vibration movement of the first mobile element along Oy without authorising a movement of the second element along the direction Ox, a third mobile element (30) that is designed to vibrate along Oy and is linked to the second mobile element and to fixed anchoring areas (34, 36) by second linking means (52, 54, 56, 58, 40, 42, 44, 46) that allow a transmission in phase opposition to the third mobile element of the vibration movement of the second mobile element along Oy.

2. The gyrometer according to the preceding claim, **characterised in that** the first mobile element (50) is an external intermediate rectangular frame linked to the coupling structure and surrounding the second mobile element (10) that is constituted by an internal intermediate rectangular frame that in turn surrounds the third mobile element (30), and the coupling structure comprises an external frame (20) that surrounds the external intermediate frame.

3. The gyrometer according to claim 2, **characterised in that** the third mobile element (30), designated the detection mass, is linked to the internal intermediate frame (10) by at least two first narrow and elongated flex arms (52, 54, 56, 58) that have a high yield strength in the direction Ox and a low stiffness in the direction Oy, and the detection mass (30) is linked to at least one anchoring area by at least two second narrow and elongated flex arms (40, 42, 44, 46) that have a high yield strength in the direction Ox and a low stiffness in the direction Oy.

4. The gyrometer according to the preceding claim, **characterised in that** each first flex arm is folded into a U-shape and has two elongated parts that extend in the direction Ox, said two parts being linked by a short linking element.

5. The gyrometer according to any one of claims 2 to 4, **characterised in that** the internal intermediate frame (10) is linked to the external intermediate frame (50) by at least two third narrow and elongated flex arms (12, 14, 16, 18) that have a high yield strength in the direction Oy and a low stiffness in the direction Ox, and the intermediate internal frame (10) is linked to at least one anchoring area (34, 36) by at least two fourth narrow and elongated flex arms (60, 62, 64, 66) that have a high yield strength in the direction Ox and a low stiffness in the direction Oy.

6. The gyrometer according to the preceding claim, **characterised in that** each third flex arm is folded into a U-shape and has two elongated parts that extend in the direction Oy, said two parts being linked by a short linking element.

7. The gyrometer according to the preceding claim, **characterised in that** the short linking element of one of the three arms (12) is linked to a similar linking element of another third arm (14) via a cross-beam (11) that extends in the direction Ox.

8. The gyrometer according to any one of claims 1 to 7, **characterised in that** the coupling structure (20, 20', 22) is linked to the first mobile element of each assembly by short rigid links (63, 65).

9. The gyrometer according to any one of claims 1 to 8, **characterised in that** the coupling structure comprises, around each mobile assembly, an external frame (20, 20') and a short linking bar (22) between the external frames.

10. The gyrometer according to any one of the preceding claims, **characterised in that** the fixed anchoring areas of the third mobile element (30) are distinct from the second fixed anchoring areas of the second mobile element (10).

11. The gyrometer according to any one of claims 1 to 10, **characterised in that** if $K_{40,42,44,46}$ is the stiffness coefficient of the second flex arms (40, 42, 44, 46), $K_{60, 62, 64, 66}$ is the stiffness coefficient of the fourth flex arms (60, 62, 64, 66), $K_{20}$ is the stiffness coefficient along Oy of the external frame, and $M_{50}$, $M_{10}$, $M_{30}$ are the respective masses of the first, second and third mobile elements, the following condition is respected or practically respected:

$$K_{40,42,44,46}/M_{30} = (K_{60,62,64,66}+2K_{20})/(M_{50}+M_{10}).$$

12. The gyrometer according to the preceding claim, **characterised in that** $M_{30} < M_{50}+M_{10}$ so as to increase the sensitivity of the gyrometer.

**Patentansprüche**

1. Gyrometer mit schwingender Struktur, hergestellt durch Mikrobearbeiten in einer dünnen planaren Platte, **dadurch gekennzeichnet, dass** es zwei symmetrische bewegliche Baugruppen (30, 10, 50; 30', 10', 50') umfasst, die durch eine Kopplungsstruktur (20, 20', 22) gekoppelt sind, die diese zwei Baugruppen verbindet, so dass mechanische Schwingungsenergie dazwischen übertragen werden kann, wobei jede bewegliche Baugruppe drei bewegliche Elemente (30, 10, 50) umfasst, ein erstes bewegliches Trägheitselement (50) zum Schwingen entlang zwei orthogonalen Richtungen Ox und Oy in der Ebene der Platte, ein zweites bewegliches Element (10) zum Schwingen entlang Oy, das mit dem ersten beweglichen Element (50) und festen Verankerungszonen (34, 36) durch erste Verbindungsmittel (12, 14, 16, 18, 60, 62, 64, 66) verbunden ist, die die Übertragung der Schwingungsbewegung des ersten beweglichen Elements entlang Oy auf das zweite bewegliche Element zulässt, ohne eine Bewegung des zweiten Elements entlang der Richtung Ox zuzulassen, ein drittes bewegliches Element (30) zum Schwingen entlang Oy, das mit dem zweiten beweglichen Element und festen Verankerungszonen (34, 36) durch zweite Verbindungsmittel (52, 54, 56, 58, 40, 42, 44, 46) verbunden ist, die eine gegenphasige Übertragung der Schwingungsbewegung des zweiten beweglichen Elements entlang Oy auf das dritte bewegliche Element zulassen.

2. Gyrometer nach dem vorherigen Anspruch, **dadurch gekennzeichnet, dass** das erste bewegliche Element (50) ein äußerer rechteckiger Zwischenrahmen ist, der mit der Kopplungsstruktur verbunden ist und das zweite bewegliche Element (10) umgibt, das durch einen inneren rechteckigen Zwischenrahmen gebildet wird, der wiederum das dritte bewegliche Element (30) umgibt, und die Kopplungsstruktur einen äußeren Rahmen (20) umfasst, der den äußeren Zwischenrahmen umgibt.

3. Gyrometer nach Anspruch 2, **dadurch gekennzeichnet, dass** das dritte bewegliche Element (30), Detektionsmasse genannt, mit dem inneren Zwischenrahmen (10) durch wenigstens zwei erste schmale und langgestreckte Biegearme (52, 54, 56, 58) verbunden ist, die eine hohe Streckfestigkeit in der Richtung Ox und eine geringe Steifigkeit in der Richtung Oy haben, und die Detektionsmasse (30) mit wenigstens einer Verankerungszone durch wenigstens zwei zweite schmale und langgestreckte Biegearme (40, 42, 44, 46) verbunden ist, die eine hohe Streckfestigkeit in der Richtung Ox und eine geringe Steifigkeit in der Richtung Oy aufweisen.

4. Gyrometer nach dem vorherigen Anspruch, **dadurch gekennzeichnet, dass** jeder erste Biegearm U-förmig gefaltet ist und zwei langgestreckte Teile hat, die in der Richtung Ox verlaufen, wobei die beiden Teile durch ein kurzes Verbindungselement verbunden sind.

5. Gyrometer nach einem der Ansprüche 2 bis 4, **dadurch gekennzeichnet, dass** der innere Zwischenrahmen (10) mit dem äußeren Zwischenrahmen (50) durch wenigstens zwei dritte schmale und langgestreckte Biegearme (12, 14, 16, 18) verbunden ist, die eine hohe Streckfestigkeit in der Richtung Oy und eine geringe Steifigkeit in der Richtung Ox haben, und der innere Zwischenrahmen (10) mit wenigstens einer Verankerungszone (34, 36) durch wenigstens zwei vierte schmale und langgestreckte Biegearme (60, 62, 64, 66) verbunden ist, die eine hohe Streckfestigkeit in der Richtung Ox und eine geringe Steifigkeit in der Richtung Oy haben.

6. Gyrometer nach dem vorherigen Anspruch, **dadurch gekennzeichnet, dass** jeder dritte Biegearm U-förmig gefaltet ist und zwei langgestreckte Teile hat, die in der Richtung Oy verlaufen, wobei die beiden Teile durch ein kurzes Verbindungselement miteinander verbunden sind.

7. Gyrometer nach dem vorherigen Anspruch, **dadurch gekennzeichnet, dass** das kurze Verbindungselement von einem der drei Arme (12) mit einem ähnlichen Verbindungselement eines anderen dritten Arms (14) über eine Traverse (11) verbunden ist, die in der Richtung Ox verläuft.

8. Gyrometer nach einem der Ansprüche 1 bis 7, **dadurch gekennzeichnet, dass** die Kopplungsstruktur (20, 20', 22) mit dem ersten beweglichen Element jeder Baugruppe durch kurze starre Verbindungen (63, 65) verbunden ist.

9. Gyrometer nach einem der Ansprüche 1 bis 8, **dadurch gekennzeichnet, dass** die Kopplungsstruktur um jede bewegliche Baugruppe einen äußeren Rahmen (20, 20') und einen kurzen Verbindungsstab (22) zwischen den äußeren Rahmen umfasst.

10. Gyrometer nach einem der vorherigen Ansprüche, **dadurch gekennzeichnet, dass** sich die festen Verankerungszonen des dritten beweglichen Elements (30) von den zweiten festen Verankerungszonen des zweiten beweglichen Elements (10) unterscheiden.

**11.** Gyrometer nach einem der Ansprüche 1 bis 10, **dadurch gekennzeichnet, dass**, wenn $K_{40,42,44,46}$ der Steifigkeitskoeffizient der zweiten Biegearme (40, 42, 44, 46) ist, $K_{60,62,64,66}$ der Steifigkeitskoeffizient der vierten Biegearme (60, 62, 64, 66) ist, $K_{20}$ der Steifigkeitskoeffizient entlang Oy des äußeren Rahmens ist und $M_{50}$, $M_{10}$, $M_{30}$ die jeweiligen Massen des ersten, zweiten und dritten mobilen Elements sind, die folgende Bedingung erfüllt oder praktisch erfüllt wird:

$$K_{40,42,44,46}/M_{30} = (K_{60,62,64,66}+2K_{20})/(M_{50}+M_{10}).$$

**12.** Gyrometer nach dem vorherigen Anspruch, **dadurch gekennzeichnet, dass** $M_{30} < M_{50}+M_{10}$, so dass die Empfindlichkeit des Gyrometers erhöht wird.

FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 02066927 A
- EP 1170573 A
- US 2003131664 A